# EUROPEAN PATENT APPLICATION

(11) **EP 4 779 767 A1**
(43) Date of publication of application: **22.07.2026**
(21) Application number: 24816694.4
(22) Date of filing: 06.09.2024
(51) Int. Cl.: H01M 50/124, H01M 50/121, H01M 50/119, H01M 50/105, H01M 50/131, H01M 50/14

(54) **SECONDARY BATTERY CELL POUCH HAVING EXCELLENT CHEMICAL RESISTANCE**

(30) Priority: 11.09.2023 KR 20230120559; 13.11.2023 KR 20230156803
(71) Applicant: Lillem Co., Ltd., Hwaseong-si, Gyeonggi-do, 18581 (KR)
(72) Inventor: HAN, Kyu-Dong, 18581 Gyeonggi-do (KR); PARK, Jong-Hyub, 18581 Gyeonggi-do (KR); NA, Ki-Hyun, 18581 Gyeonggi-do (KR); JANG, Hyuk-Jun, 18581 Gyeonggi-do (KR); KWON, Sol, 18581 Gyeonggi-do (KR)
(74) Representative: Zacco Sweden AB
(86) International application number: PCT/KR2024/013477
(87) International publication number: WO 2025/058332

(57) **Abstract**

Disclosed is a cell pouch for a secondary battery, which is excellent in moldability and chemical resistances such as electrolyte resistance, solvent resistance and scratch resistance as a coating layer containing a melamine resin is used.

The cell pouch includes a coating layer that contains melamine resin; an external resin layer disposed on one side of the coating layer; a metal layer dispose on one side of the external resin layer; and an internal resin layer disposed on one side of the metal layer.

## Description

### [Technical Field]

The disclosure relates to a cell pouch for a secondary battery, which is excellent in chemical resistance by using a coating layer that contains a melamine resin.

### [Background Art]

Secondary batteries are classified into pouch-type secondary batteries, cylindrical secondary batteries, prismatic secondary batteries, etc. according to the materials of a casing for accommodating an electrode assembly, and the pouch-type secondary batteries are generally used in terms of capacity and safety.

The pouch-type secondary battery has a structure that the electrode assembly is accommodated in a pouch formed with a pouch film made of a soft polymer material. Such a pouch film has a structure including an innermost layer, an intermediate layer, a barrier layer, a resin layer, and an outermost layer.

Currently, medium- and large-sized pouches are mainly used in energy storage systems (ESS) or electric vehicles (EV) that require high capacity and high output. In this regard, the stabilities of the pouches used in the high-capacity and high-output ESS and EV are at issue.

Small-sized pouches include a nylon layer as the outermost layer and may crack due to small scratches, foreign substances, etc. on the surface thereof. Therefore, the small-sized pouches have a problem of increasing the risks of fire and explosion.

In the case of the medium- and large-sized pouches, a polyethylene terephthalate (PET) film resistant to scratches, abrasion, and solvent reaction is additionally laminated on the nylon layer to prevent the cracks and the like problems. However, the PET film laminated on the nylon layer deteriorates moldability compared to a pouch film including the nylon layer as the outermost layer, and is thus insufficient to satisfy the physical properties required for the pouch.

Accordingly, there is a need for research on materials excellent in moldability, satisfying the physical properties required for the pouch, and replacing the existing PET film.

### [Disclosure]

### [Technical Problem]

An aspect of the disclosure is to provide a cell pouch for a secondary battery, which is excellent in moldability, electrolyte resistance, solvent resistance and scratch resistance by replacing the existing PET film with a coating layer that contains a melamine resin.

Another aspect of the disclosure is to provide a cell pouch for a secondary battery, which is improved in the slipperiness by adding wax to a coating layer.

Still another aspect of the disclosure is to provide a cell pouch for a secondary battery, of which physical properties are implemented with only a coating layer that contains a melamine resin instead of the existing PET film, and which is economically feasible in terms of manufacturing costs.

The aspects of the disclosure are not limited to the aforementioned aspects, and thus other aspects and advantages of the disclosure which are not mentioned will be understood by the following descriptions and will be more apparently appreciated by the embodiments of the disclosure. Further, it will be easily appreciated that the aspects and advantages of the disclosure can be implemented by the means described in the appended claims and the combination thereof.

### [Technical Solution]

According to the disclosure, a cell pouch includes: a coating layer that contains melamine resin; an external resin layer provided on one side of the coating layer; a metal layer provided on one side of the external resin layer; and an internal resin layer provided on one side of the metal layer.

The coating layer may include a main agent and a curing agent, and the main agent may contain 70 to 100 parts by weight of urethane resin, 15 to 30 parts by weight of silica powder, 2 to 15 parts by weight of wax, and 2 to 10 parts by weight of polyester polyol, relative to 100 parts by weight of the melamine resin.

The coating layer may include the main agent and the curing agent in a weight ratio of 14 to 16 : 1.

The melamine resin may have a viscosity of 90 to 150 cPs at 25°C.

The silica powder may have a diameter of 1 to 20 µm.

The wax may have a diameter of 1 to 20 µm.

The cell pouch may have a tensile strength of 10 to 30kg/15mm in a machine direction (MD) and a transverse direction (TD) under conditions of 23°C and a humidity of 50%.

The cell pouch may have an elongation of 80 to 100% in a machine direction (MD) and a transverse direction (TD) under conditions of 23°C and a humidity of 50%.

Regarding the moldability, when observed with naked eyes after forming the cell pouch by using a mold, of which a molding groove may have a depth of 4 to 7.5 mm and lowering a hydraulic cylinder into the molding groove, a depth before the surface of the cell pouch may have a crack is 7.0 to 7.5mm
(where, the crack means a crack of which a length is longer than or equal to 0.1 mm).

Regarding the electrolyte resistance, when observed with naked eyes after dropping one drop of an electrolyte (ethylene carbonate (EC): diethyl carbonate (DEC): ethylmethyl carbonate (EMC) = 1: 1:1, LiPF₆ 1M) on the surface of the coating layer of the cell pouch, which may have a width of 100 mm and a length of 100 mm, using a pipette and after 60 seconds wiping off the dropped electrolyte, the surface of the coating layer is maintained the same as before dropping the electrolyte with the pipette.

Regarding the solvent resistance, after the surface of the coating layer of the cell pouch, which may have a width of 100 mm and a length of 100 mm, is rubbed with a cotton swab soaked in any one solvent of the electrolyte (ethylene carbonate (EC): diethyl carbonate (DEC): ethylmethyl carbonate (EMC) = 1: 1:1, LiPF₆ 1M), ethyl alcohol, methylethylketone, and toluene, by 1 cm to each of the left and right from a touching point, the number of rub times of when the surface of the coating layer is peeled off is more than or equal to 30.

Regarding the scratch resistance, there are no scratches even when a steel brush is put on the surface of the cell pouch, which may have a width of 80 mm and a length of 150 mm, pressed with a weight of 400g, and reciprocated 2 or 6 times to make scratches and a degree of scratches is then measured using KP-M4250 equipment (where, the scratch means a scratch on the surface of the cell pouch by 0.1 µm or more in a depth direction and/or length direction).

According to an alternative embodiment, a cell pouch includes a coating layer that contains a melamine resin, in which the coating layer includes a main agent and a curing agent, and the main agent contains 70 to 100 parts by weight of urethane resin, 15 to 30 parts by weight of silica powder, 2 to 15 parts by weight of wax, and 2 to 10 parts by weight of polyester polyol, relative to 100 parts by weight of the melamine resin

According to an alternative embodiment, a cell pouch includes a coating layer that contains a melamine resin, in which the coating layer includes a main agent and a curing agent, and the main agent contains melamine resin, urethane resin, silica powder, wax, and polyester polyol.

According to an alternative embodiment, a cell pouch includes a coating layer that contains a melamine resin, in which the coating layer includes a main agent and a curing agent, and the main agent contains melamine resin, urethane resin, silica powder, wax, and polyester polyol, while satisfying at least one of a viscosity of 90 to 150 cPs at 25°C and a specific gravity of 0.93 to 1.03 at 25°C.

According to an alternative embodiment, a cell pouch includes a coating layer that contains a melamine resin, in which the coating layer includes a main agent and a curing agent, and the main agent contains melamine resin, urethane resin, silica powder, wax, and polyester polyol, while the polyester polyol satisfies at least one of a hydroxyl value (OH value) of 48 to 55 mgKOH/g, a weight-average molecular weight of 2000 to 2500g/mol, and a viscosity of 3000 to 4000cP at 25 °C.

According to an alternative embodiment, a cell pouch includes a coating layer that contains a melamine resin, in which the coating layer includes a main agent and a curing agent in a weight ratio of 14 to 16 : 1.

According to an alternative embodiment, a cell pouch includes a coating layer that contains a melamine resin, in which the melamine resin has a viscosity of 90 to 150 cPs at 25°C.

According to an alternative embodiment, a cell pouch has a tensile strength of 10 to 30kg/15mm in each of a machine direction (MD) and a transverse direction (TD) under conditions of 23°C and a humidity of 50%.

According to an alternative embodiment, a cell pouch has an elongation of 80 to 100% in each of a machine direction (MD) and a transverse direction (TD) under conditions of 23°C and a humidity of 50%.

According to an alternative embodiment, when observed with naked eyes after forming the cell pouch by using a mold, of which a molding groove has a depth of 4 to 7.5 mm and lowering a hydraulic cylinder into the molding groove, a depth before the surface of the cell pouch has a crack is 7.0 to 7.5mm.

According to an alternative embodiment, when observed with naked eyes after dropping one drop of an electrolyte (ethylene carbonate (EC): diethyl carbonate (DEC): ethylmethyl carbonate (EMC) = 1: 1:1, LiPF₆ 1M) on the surface of the coating layer of the cell pouch, which has a width of 100 mm and a length of 100 mm, using a pipette and after 60 seconds wiping off the dropped electrolyte, the surface of the coating layer is maintained the same as before dropping the electrolyte with the pipette.

According to an alternative embodiment, after the surface of the coating layer of the cell pouch, which has a width of 100 mm and a length of 100 mm, is rubbed with a cotton swab soaked in any one solvent of the electrolyte (ethylene carbonate (EC): diethyl carbonate (DEC): ethylmethyl carbonate (EMC) = 1: 1:1, LiPF₆ 1M), ethyl alcohol, methylethylketone, and toluene, by 1 cm to each of the left and right from a touching point, the number of rub times of when the surface of the coating layer is peeled off is more than or equal to 30.

According to an alternative embodiment, there are no scratches even when a steel brush is put on the surface of the cell pouch, which has a width of 80 mm and a length of 150 mm, pressed with a weight of 400g, and reciprocated 2 or 6 times to make scratches and a degree of scratches is then measured using KP-M4250 equipment.
(where, the scratch means a scratch on the surface of the cell pouch by 0.1 µm or more in a depth direction and/or length direction).

### [Advantageous Effects]

Compared to cell pouch using the existing PET film, according to the disclosure, a cell pouch for a secondary battery is excellent in moldability, electrolyte resistance, solvent resistance and scratch resistance by using a coating layer that contains a melamine resin.

Further, the cell pouch for the secondary battery is improved in the slipperiness by adding wax to the coating layer, implements physical properties with only the coating layer that contains the melamine resin instead of the existing PET film, and is economically feasible in terms of manufacturing costs.

The above and other effects of the disclosure will be described below together with detailed descriptions for carrying out the disclosure.

### [Description of Drawings]

FIG. 1 is a cross-sectional view of a cell pouch for a secondary battery according to the disclosure.
FIG. 2 shows electrolyte resistance test results of a cell pouch for a secondary battery according to an embodiment 1 of the disclosure.
FIG. 3 shows solvent resistance test results of the cell pouch for the secondary battery according to the embodiment 1 of the disclosure.
FIG. 4 shows scratch resistance test results of the cell pouch for the secondary battery according to the embodiment 1 of the disclosure.

### [Mode for Invention]

The above-mentioned purposes, features, and advantages will be described in detail with reference to the accompanying drawings. Therefore, a person having ordinary knowledge in the art to which the disclosure pertains may easily implement the scope and spirit of the disclosure. In description, if it is determined that detailed descriptions of well-known technology associated with the disclosure may blur the gist of the disclosure unnecessarily, the detailed descriptions will be omitted. Hereinafter, exemplary embodiments of the disclosure will be described in detail with reference to the accompanying drawings. In the drawings, the same reference numerals are used to indicate the same or similar components.

Hereinafter, when any component is arranged at "an upper portion (or a lower portion)" of a component or "on (or below") the component, any component may be arranged in contact with an upper surface (or a lower surface) of the component, and another component may be interposed between the component and any component arranged on (or under) the component.

Further, when one component is described as being "connected", "coupled", or "joined" to another component, these components may be connected or joined directly; however, it is also to be understood that an additional component may be "interposed" between these components or these components may be "connected", "coupled" or "jointed" through the additional component.

Hereinafter, a cell pouch for a secondary battery, improved in chemical resistance according to some embodiments of the disclosure will be described.

The cell pouch includes a polyethylene terephthalate (PET) film placed on an outermost layer to protect a nylon layer and to prevent scratches and foreign substances. However, the PET film causes a problem of deteriorating moldability due to its low elongation.

Therefore, the inventor confirmed that the cell pouch for the secondary battery was excellent in moldability, electrolyte resistance, solvent resistance and scratch resistance when using a coating layer containing melamine resin as the outermost layer, and that the coating layer could replace the existing PET film.

Further, the inventor improved the moldability and the slipperiness of the cell pouch by adding wax to the coating layer. In addition, the inventor confirmed that the physical properties of the cell pouch are implemented with only the coating layer containing the melamine resin instead of the existing PET film and that the coating layer is advantageous in terms of unit price competition.

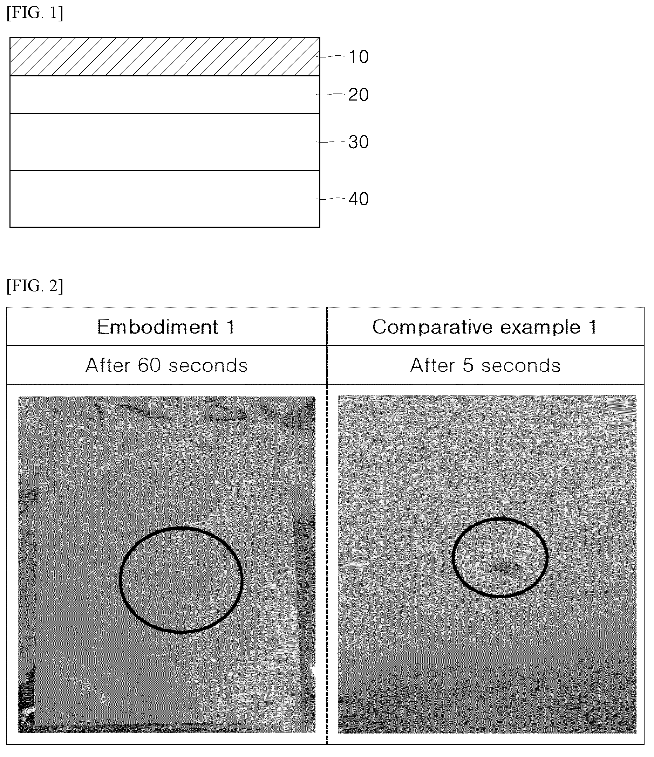

FIG. 1 is a cross-sectional view of a cell pouch for a secondary battery according to the disclosure.

As shown in FIG. 1, the cell pouch for the secondary battery according to the disclosure includes a coating layer 10, an external resin layer 20, a metal layer 30, and an internal resin layer 40.

The coating layer 10 serves as the outermost layer, and the internal resin layer 40 serves as the innermost layer. When the secondary battery is assembled, the internal resin layers positioned around the secondary batteries are thermally fused to seal the secondary battery.

### Coating layer 10

The coating layer refers to a cured product of composition that contains a main agent, a curing agent, and a solvent. In the coating layer, only the main agent and the curing agent remain while evaporating the solvent.

The main agent refers to an element that gives the physical properties to the coating layer and is important in securing the moldability, the electrolyte resistance, the solvent resistance and the scratch resistance of the cell pouch.

Conventionally, the coating layer has been generally made of polyethylene terephthalate (PET), but the low elongation of the PET causes problems of deteriorating the moldability of the coating layer, thereby making it difficult to implement the physical properties required for the cell pouch.

To solve such problems, the main agent according to the disclosure may contain melamine resin, urethane resin, silica powder, the wax, and polyester polyol. Preferably, the main agent may contain 70 to 100 parts by weight of the urethane resin, 15 to 30 parts by weight of the silica powder, 2 to 15 parts by weight of the wax, and 2 to 10 parts by weight of the polyester polyol, relative to 100 parts by weight of the melamine resin.

In other words, the coating layer may refer to a cured product of composition that contains the main agent, which contains the melamine resin, the urethane resin, the silica powder, the wax, and the polyester polyol; the curing agent; and the solvent.

The melamine resin refers to thermosetting resins produced by reaction between melamine and formaldehyde, and belongs to an amino resin among the thermosetting resins. The melamine resin may have an effect on strengthening the surface of the coating layer while improving the solvent resistance, electrolyte resistance, adhesion, durability, strength, etc. of the surface.

The composition containing the melamine resin may not only be coated on the external resin layer but also provide the adhesion to the external resin layer. When the composition containing the melamine resin is cured, a colorless and transparent film is formed. The film or coating layer formed by curing the composition containing the melamine resin has water resistance, heat resistance, and chemical resistance, is colorless and transparent in itself, has a high gloss, and has hardness resistant to scratches.

In this regard, the melamine resin may have a viscosity of 90 to 150 cPs, preferably 100 to 140 cPs at 25°C (measured using Brookfield viscometer RV1, 50 RPM). When it is satisfied that the melamine resin has a viscosity of 90 to 150 cPs at 25°C, excellent coating workability is secured.

Further, the melamine resin may have a specific gravity of 0.93 to 1.03 at 25°C, a curing temperature of 170 to 190°C, and a curing time of 5 to 20 seconds.

The urethane resin is flexible, contributes to adhesion to the external resin layer, and exhibits good moldability. As a result, the urethane resin has an advantageous effect in minimizing cracks at edges when the cell pouch is molded.

The urethane resin may include a curable urethane resin as a product of reaction between polyol and isocyanate.

Polyol refers to a compound having two or more hydroxyl functional groups, and may include one or more selected from the group consisting of polyester polyol, polyether polyol, polycarbonate polyol, acrylic polyol, and polycaprolactone polyol.

Isocyanate may contain one or more selected from the group consisting of aromatic diisocyanate (e.g., 2,6-toluene diisocyanate; 2,5-toluene diisocyanate; 2,4-toluene diisocyanate; m-phenylene diisocyanate; p-phenylene diisocyanate; methylene bis(o-chlorophenyl diisocyanate); methylenediphenylene-4,4'-diisocyanate; polycarbodiimide-modified methylenediphenylene diisocyanate; (4,4'-diisocyanato-3,3',5,5'-tetraethyl) diphenylmethane; 4,4'-diisocyanato-3,3'-dimethoxybiphenyl (o-dianisidine diisocyanate); 5-chloro-2,4-toluene diisocyanate; and 1-chloromethyl-2,4-diisocyanatobenzene), aromatic-aliphatic diisocyanate (e.g., m-xylylene diisocyanate and tetramethyl-m-xylylene diisocyanate); aliphatic diisocyanate (e.g., 1,4-diisocyanatobutane; 1,6-diisocyanatohexane; 1,12-diisocyanatododecane; and 2-methyl-1,5-diisocyanatopentane); cycloaliphatic diisocyanate (e.g., methylenedicyclohexylene-4,4'-diisocyanate; 3-isocyanatomethyl-3,5,5-trimethylcyclohexyl isocyanate (isophoron diisocyanate); 2,2,4-trimethylhexyl diisocyanate; and cyclohexylene-1,4-diisocyanate), polymeric or oligomeric compound terminated by two isocyanate functional groups (e.g., polyoxyalkylene, polyester, polybutadienyl, etc.) (e.g., diurethane of toluene-2,4-diisocyanate-terminated polypropylene oxide glycol); and polyisocyanate available from Bayer Corporation (located in Pittsburgh, Pennsylvania, United States) as the trade names of MONDUR and DESMODUR (e.g., DESMODUR XP7100 and DESMODUR 3300). Preferably, isocyanate may include one or more among TDI (trilenediisocyanate), HDI (hexamethylenediisocyanate), and MDI (methylenebis(4,1-phenylene)diisocyanate).

The main agent may contain 70 to 100 parts by weight, preferably 80 to 100 parts by weight of the urethane resin, relative to 100 parts by weight of the melamine resin.

When it is satisfied that the main agent contains 70 to 100 parts by weight of the urethane resin, the excellent flexibility and moldability of the cell pouch are secured.

The silica powder is added to make the coating layer matte or glossy. As the coating layer contains the silica powder, a degree of matte is controlled to suppress the gloss, thereby having an effect on securing a stable outer appearance. Further, the silica powder contained in the coating layer may improve the slipperiness and the moldability. Therefore, there is an advantageous effect on minimizing a phenomenon that the layers of the cell pouch are adhered to together.

In this regard, the silica powder may have a diameter of 1 to 20 µm, and preferably 1 to 15 µm. When it is satisfied that the silica powder has a diameter of 1 to 20 µm, there are an advantageous effect on controlling the matte and an effect on exhibiting excellent dispersibility in the main agent.

To improve not only a matte effect but also reactivities with the melamine resin, the urethane resin and the wax, the silica powder contained in the coating layer may include the silica powder having a small specific surface area rather than a porous silica powder having a large specific surface area.

When the porous silica is used, the porous silica powder may absorb solvent and moisture and thus the surface area of the silica powder change, thereby causing a dull matte and a stain.

Further, a stain may occur due to moisture absorbed in the cell pouch after printing even though the surface coating of the cell pouch is good during the printing, thereby making it difficult to use the cell pouch.

The main agent may contain 15 to 30 parts by weight, preferably 20 to 25 parts by weight of the silica powder, relative to 100 parts by weight of the melamine resin.

When 15 to 30 parts by weight of the silica powder is satisfied, the excellent outer appearance of the cell pouch is secured.

Due to the silica powder, an uneven portion may be formed on the surface of the coating layer. To alleviate and reduce the uneven portion, wax may be added to the coating layer.

By adding the wax to the coating layer, a matte effect and a scratch resistance effect may be achieved. In particular, the wax minimizes friction between the coating layer and a metal portion during molding based on a mold, and thus improves the slipperiness of the coating layer, thereby having an advantageous effect on improving the moldability.

Good slipperiness means that the residual stress of the coating layer is so low that a stain and lifting rarely occur in the coating layer. However, when the slipperiness is excessive, misalignment may occur due to slipping during molding using a mold, thereby causing incomplete molding.

The slipperiness may be quantified as the surface slip strength (N/mm) of force (N) versus moving distance (mm). The higher the surface slip strength, the higher the adhesion to the coating layer. In this case, the stain or lifting is likely to occur. Low surface slip strength means that the coating layer easily slips even with low force.

In this regard, the wax may include one or more among carnauba wax, paraffin wax, polyethylene wax, silicone wax, polyethylene-based wax and polypropylene-based wax.

The wax is given in the form of powder, and has a diameter of 1 to 20 µm, preferably 2 to 15 µm. When it is satisfied that the wax has a diameter of 1 to 20 µm, there is an advantage in securing the slipperiness and the matte effect.

To increase the matte effect, the wax may include wax having a large diameter.

However, when the diameter of the wax is larger than 20 µm, printing defects are likely to occur.

Therefore, to ensure the easy dispersibility, matte effect and slipperiness, it is preferable that the wax has a diameter of 1 to 20 µm.

Meanwhile, the silica powder and the wax may be dispersed in the process of preparing the composition of the main agent, and thus split to have a finer size.

The main agent may contain 2 to 15 parts by weight, preferably 2 to 10 parts by weight of the wax, relative to 100 parts by weight of the melamine resin.

When it is satisfied that the main agent contains 2 to 15 parts by weight of the wax, the slipperiness, moldability, and excellent physical properties of the cell pouch are secured.

The polyester polyol may be added to react with moisture in air and then have a subsequent reaction with the curing agent contained in ink in the process of reaction with the isocyanate curing agent in a ratio of 1:1.

In this regard, the polyester polyol may have a hydroxyl value (OH value) of 45 to 62 mgKOH/g, a weight-average molecular weight of 1800 to 3000 g/mol, and a viscosity of 1000 to 5000 cP at 25 °C.

Specifically, the polyester polyol may have a hydroxyl value (OH Value) of 48 to 55 mgKOH/g, a weight-average molecular weight of 2000 to 2500 g/mol, and a viscosity of 3000 to 4000 cP at 25 °C.

The polyester polyol may include a material produced by reaction between at least one type of polybasic acid and at least one type of diol. The polybasic acid may include aliphatic dibasic acids such as succinic acid, glutaric acid, adipic acid, pimelic acid, suberic acid, azelaic acid, sebacic acid, and brassylic acid; aromatic dibasic acids such as isophthalic acid, terephthalic acid, and naphthalene dicarboxylic acid; and the like dibasic acids. The diol may include aliphatic diols such as ethylene glycol, propylene glycol, butanediol, neopentyl glycol, methyl pentanediol, hexanediol, heptanediol, octanediol, nonanediol, decanediol, and dodecanediol; alicyclic diols such as cyclohexane diol and hydrogenated xylylene glycol; and aromatic diols such as xylylene glycol.

The main agent may contain 2 to 10 parts by weight, preferably 2 to 5 parts by weight of the polyester polyol, relative to 100 parts by weight of the melamine resin.

When it is satisfied that the main agent contains 2 to 10 parts by weight of the polyester polyol, the polyester polyol and the the isocyanate curing agent react in a ratio of 1:1 to decrease the OH content and perform the curing reaction, thereby achieving a desired effect of the physical properties.

On the other hand, when the content of polyester polyol is more than 10 parts by weight, OH that does not participate in the reaction increases to take a long time in a drying process and cause a blocking phenomenon, thereby insufficiently forming the coating layer.

In this way, the coating layer may contain the main agent and the curing agent, in which the main agent contains 70 to 100 parts by weight of the urethane resin, 15 to 30 parts by weight of the silica powder, 2 to 15 parts by weight of the wax and 2 to 10 parts by weight of the polyester polyol, relative to 100 parts by weight of the melamine resin.

The curing agent may contain isocyanate curing agent to exhibit a curing reaction while combining with the hydroxyl group of the polyester polyol contained in the main agent in a ratio of 1:1.

The polyester polyol and the isocyanate curing agent react with each other in a ratio of 1:1. When the content of the isocyanate curing agent is more than the content of polyester polyol, the isocyanate first combines with OH in air and the remaining isocyanate combines with the polyester polyol. Therefore, it is preferable that the content of the isocyanate curing agent in the coating layer is more than the content of the polyester polyol.

In consideration of 2 to 10 parts by weight of the polyol relative to 100 parts by weight of the main agent and a ratio of 14 to 16 : 1 between the main agent to the curing agent, the content of the isocyanate curing agent may be 6 to 7 parts by weight. In other words, the content of the curing agent (e.g., 6 to 7 parts by weight of the curing agent) may be more than the content of the polyol (e.g., 2 to 10 parts by weight of the polyol).

The isocyanate curing agent may include one or more among 2,4- or 2,6-tolylene diisocyanate, xylylene isocyanate, 4,4'-diphenylmethane diisocyanate, methylene diisocyanate, isopropylene diisocyanate, lysine diisocyanate, 2,2,4- or 2,4,4-trimethylhexamethylene diisocyanate, 1,6-hexamethylene diisocyanate, methylcyclohexane diisocyanate, isophorone diisocyanate, 4,4'-dicyclohexylmethane diisocyanate, and isopropylidene dicyclohexyl-4,4'-diisocyanate.

The coating layer may contain an organic solvent in addition to the main agent and the curing agent to increase the viscosity of the composition and the dispersibility of the components.

The organic solvent may include one or more among toluene, methyl ethyl ketone (MEK), n-hexane, dimethylsulfoxide (DMSO), dimethylformamide (DMF), N-methyl-2-pyrrolidinone (NMP), 2-butanone, 4-methyl-2-pentanone, methylalcohol, ethylalcohol (EA), isopropylalcohol, isobutylalcohol, t-butylalcohol, benzylalcohol, and ethyleneglycol.

Preferably, the organic solvent may include one or more of methyl ethyl ketone (MEK) and ethylalcohol.

When the organic solvent includes one or more of methyl ethyl ketone (MEK) and ethylalcohol, the organic solvent is excellent in compatibility with the melamine resin, thereby having advantages of generating no particles and causing no gelation phenomenon.

The coating layer may have a thickness of 0.5 to 10 µm, preferably 1 to 5 \µm.

The coating layer may contain the main agent and the curing agent in a weight ratio of 14 to 16 : 1, and may contain the main agent, the curing agent and the solvent in a weight ratio of 14 to 16 : 1 : 1 to 3.

When the ratio of the main agent, the curing agent, and the solvent satisfies the foregoing range, there is an effect on improving the workability based on the curing and coating properties of the coating layer. Further, when the ratio satisfies the foregoing range, there is an advantage in exhibiting the surface characteristics and the physical properties required for the coating layer.

The coating layer refers to a cured product of composition that contains the main agent, the curing agent, and the solvent. In the coating layer, the solvent has evaporated, and only the main agent and the curing agent remain.

### External resin layer 20

The external resin layer is provided on one side of the coating layer. The external resin layer electrically insulates the electrode assembly from the outside while protecting the secondary battery from friction and collision with the outside.

For example, the external resin layer may contain one or more among polyethylene, polypropylene, polycarbonate, polyethyleneterephthalate, polyvinyl chloride, acrylic polymer, polyacrylonitrile, polyimide, polyamide, cellulose, aramid, nylon, polyester, polyparaphenylenebenzobisoxazole, polyarylate, and Teflon.

In particular, the external resin layer may include a stretchable film made of a heat resistant resin in terms of the moldability and the heat resistance. The heat resistant resin may contain one or more of nylon and polyethyleneterephthalate (PET), preferably one or more types of nylon, such as nylon 6, nylon 6,6, a copolymer of nylon 6 and nylon 6,6, nylon 6,10, and polymetaxylyleneadipamide (MXD6).

The external resin layer may have a single film structure, or a composite membrane structure forming respective layers.

When the external resin layer has the composite membrane structure, the membranes may be bonded using an adhesive composition or by dry lamination or coextrusion without limitations.

The thickness of the external resin layer is, but not particularly limited to, preferably 10 to 40 µm, and more preferably 15 to 25 µm. When the thickness of the external resin layer is less than 10 µm, raw material costs may increase. On the other hand, when the thickness of the external resin layer exceeds 40 µm, the elongation of the cell pouch may be decreased in elongation and deteriorated in moldability.

### Adhesive layer (not shown)

To firmly adhere the external resin layer 20 and the metal layer 30, the adhesive layer is formed between the external resin layer and the metal layer. An adhesive used in forming the adhesive layer may include a two-liquid curable adhesive or a one-liquid curable adhesive.

Further, a bonding mechanism for the adhesive used in forming the adhesive layer is, but not particularly limited to, any of chemical reaction type, solvent volatilization type, heat melt type, heat pressure type, etc.

Specifically, the resin component of the adhesive layer may contain at least one among polyester-based resins such as polyethyleneterephthalate, polybutyleneterephthalate, polyethylenenaphthalate, polybutylenenaphthalate, polyethyleneisophthalate, polycarbonate, and copolyester; polyether-based adhesive; polyurethane-based adhesive; epoxy-based resins; phenolic resin-based resin; polyamide-based resins such as nylon 6, nylon 66, nylon 12, and copolyamide; polyolefin-based resins such as polyolefin, acid-modified polyolefin, and metal-modified polyolefin; polyvinyl acetate-based resin; cellulose-based adhesive; (meth)acryl-based resins; polyimide-based resins; amino resins such as urea resin, and melamine resin; rubbers such as chloroprene rubber, nitrile rubber, and styrene-butadiene rubber; silicone-based resins; and fluorinated ethylenepropylene copolymer.

Preferably, the adhesive component may include one or more among a blend resin of polyamide and acid-modified polyolefin; a blend resin of polyamide and metal-modified polyolefin; a blend resin of polyamide and polyester; a blend resin of polyester and acid-modified polyolefin; and a blend resin of polyester and metal-modified polyolefin. Among them, one or more of a polyurethane-based two-liquid curable adhesive, polyamide, polyester, or a blend resin of these and modified polyolefin may be contained in terms of excellent durability or strain suppression under high humidity conditions, excellent thermal deterioration suppression during heat sealing, and effective suppression of delamination by suppressing decrease in lamination strength between the external resin layer and the metal layer.

The thickness of the adhesive layer may be, but not limited to, 2 to 50 µm.

### Metal layer 30

The metal layer is provided on one side of the external resin layer. The metal layer refers to a layer to improve the strength of the cell pouch and to prevent water vapor, oxygen, light, etc. from entering the battery.

The metal layer may include metals such as aluminum, stainless steel, and titanium, and may preferably include aluminum. Specifically, the metal layer may be based on metal foil, metal vapor deposition, etc. and may be preferably based on aluminum foil.

When the cell pouch is manufactured, soft aluminum foil such as annealed aluminum (JIS A8021P-O, JIS A8079P-O) may be used to prevent wrinkles or pinholes from being formed in the metal layer.

The thickness of the metal layer may be 10 to 200 µm, preferably 20 to 100 µm.

### Internal resin layer 40

The internal resin layer is provided on one side of the metal layer. The internal resin layer refers to a layer located on the side of the electrode assembly, and is thermally fused to seal the electrode assembly when the secondary battery is assembled. The internal resin layer is required to have insulating properties because it is in direct contact with the electrode assembly, and is also required to have corrosion resistance because it is in contact with an electrolyte.

The internal resin layer may include a stretchable film made of a thermoplastic resin.

The thermoplastic resin may contain one or more among polyethylene, polypropylene, olefine-based copolymer such as polypropylene-butylene-ethylene terpolymer, polycarbonate, polyethyleneterephthalate, polyvinyl chloride, acrylic polymer, polyacrylonitrile, polyimide, polyamide, cellulose, aramid, nylon, polyester, polyparaphenylenebenzobisoxazole, polyarylate, and Teflon, and may preferably contain polyolefin-based resin such as polypropylene (PP) or polyethylene (PE).

Polypropylene (PP) is excellent in mechanical properties such as tensile strength, rigidity, surface hardness, abrasion resistance, and heat resistance, and chemical properties such as corrosion resistance, and thus has an advantage of implementing the physical properties of the cell pouch in terms of forming the internal resin layer.

According to the disclosure, the stretchable film made of the thermoplastic resin is used in the internal resin layer, so that the moldability can be improved compared to that of using an unstretchable film made of the thermoplastic resin. For example, the stretchable film made of polypropylene is used in the internal resin layer, thereby improving the moldability compared to that of using an unstretchable polypropylene (casted polypropylene, CPP) film.

The stretchable film of polypropylene refers to a forcibly stretched polypropylene film due to a speed difference in equipment. The stretchable film of polypropylene may be formed by increasing a processing speed in at least one section among casting roll, corona roll, guide roll and winder after discharging a polypropylene resin melting liquid through a T-die in a T-die method for forming the unstretchable polypropylene film. For example, the stretchable film of polypropylene may be formed by increasing the processing speed by more than 1%, preferably by 1.2 to 3%, compared to that for forming the unstretchable polypropylene film. Alternatively, a commercially available product having the tensile properties described above may be used as the stretchable film of polypropylene.

The thickness of the internal resin layer may be 20 to 100 µm, preferably 40 to 80 µm. When the thickness of the internal resin layer is less than 20 µm, the electrolytic resistance may not be satisfactory. On the other hand, when the thickness of the internal resin layer exceeds 100 µm, the moldability may not be satisfactory.

The total thickness of the cell pouch for the secondary battery may be 50 to 500 µm, preferably 80 to 300 µm. When the overall thickness of the cell pouch for the secondary battery is less than 50 µm, it may be difficult to maintain the shape during molding using a mold. On the other hand, when the total thickness of the cell pouch exceeds 500 µm, processing costs increase.

The cell pouch for the secondary battery is manufactured in such a manner that the adhesive layer is applied to one side of the external resin layer by any one of an extrusion method, a gravure coating method, or a roll coating method, the metal layer and the internal resin layer are attached thereto by a co-extrusion method, a lamination method using thermal lamination, etc, and the coating layer located on the outermost layer is applied and cured on the other side of the external resin layer.

The secondary battery has a structure in which the electrode assembly and the electrolyte are accommodated in the cell pouch. The cell pouch may include upper and lower films with respect to the position of the electrode assembly.

The secondary battery may include, for example, a nickel cadmium battery, a nickel hydrogen battery, a lithium ion battery, and a lithium ion polymer battery, but is not limited thereto.

The secondary battery refers to small products such as digital cameras, mobile phones, and portable computers; large products requiring high output such as electric vehicles and hybrid vehicles; power storage devices for storing surplus generated power or renewable energy; and power storage for backup.

The cell pouch according to the disclosure may exhibit the physical properties as follows.

Under the conditions of 23°C and a humidity of 50%, the tensile strength in each of a machine direction (MD) and a transverse direction (TD) may be 10 to 30kg/15mm, preferably 12.0 to 20.0kg/15mm.

Under the conditions of 23°C and a humidity of 50%, the elongation in each of the MD and the TD may be 80 to 100%, preferably 90.0 to 100%.

Regarding the moldability, a mold, of which a molding groove has a depth of 4 to 7.5 mm, is used, and the cell pouch is formed by lowering a hydraulic cylinder into the molding groove. When observed with the naked eyes after forming the cell pouch, the depth before the surface of the cell pouch has a crack may be 7.0 to 7.5mm. Here, the crack means a crack of which a length is longer than or equal to 0.1 mm.

Regarding the electrolyte resistance, one drop of an electrolyte (ethylene carbonate (EC): diethyl carbonate (DEC): ethylmethyl carbonate (EMC) = 1: 1:1, LiPF₆ 1M) is dropped on the surface of the coating layer of the cell pouch, which has a width of 100 mm and a length of 100 mm, using a pipette, and, after 60 seconds, the dropped electrolyte is wiped off. When observed with the naked eyes after wiping off the dropped electrolyte, the surface of the coating layer is maintained the same as before dropping the electrolyte with the pipette.

Regarding the solvent resistance, the surface of the coating layer of the cell pouch, which has a width of 100 mm and a length of 100 mm, is rubbed with a cotton swab soaked in any one solvent of the electrolyte (ethylene carbonate (EC): diethyl carbonate (DEC): ethylmethyl carbonate (EMC) = 1: 1:1, LiPF₆ 1M), ethyl alcohol, methylethylketone, and toluene, by 1 cm to each of the left and right from a touching point. Thereafter, the number of rub times of when the surface of the coating layer is peeled off may be more than or equal to 30.

The rubbing by 1 cm means rubbing an area corresponding to 1cm.

Regarding the scratch resistance, a steel brush is put on the surface of the cell pouch, which has a width of 80 mm and a length of 150 mm, pressed with a weight of 400g, and reciprocated 2 or 6 times to make scratches, and a degree of scratches is measured using KP-M4250 equipment. However, there may be no scratches (where, the scratch means a scratch on the surface of the cell pouch by 0.1 µm or more in a depth direction and/or length direction).

As above, specific embodiments of the cell pouch for the secondary battery with the excellent chemical resistance are as follows.

### 1. Manufacture of cell pouch for secondary battery with excellent chemical resistance

### Embodiment 1

### 1) Coating layer:

The coating layer having a thickness of 3 µm was prepared from a composition in which the main agent, the curing agent, and the solvent were mixed in a weight ratio of 15 : 1 : 2.

The main agent contains 70 parts by weight of urethane resin, 15 parts by weight of silica powder (with a diameter of 5 to 15 µm), 2 parts by weight of carnauba wax (with a diameter of 10 to 15 µm), and 2 parts by weight of polyester polyol, relative to100 parts by weight of melamine resin (with a viscosity of 100 cPs at 25°C and a specific gravity of 1.00).

The curing agent contains isocyanate, and the solvent contains EA and MEK. The polyester polyol has a hydroxyl value (OH value) of 50 mgKOH/g, a weight-average molecular weight of 2000 g/mol, and a viscosity of 4000 cP at 25 °C.

2) External resin layer: Nylon resin was used with a thickness of 25 µm.

3) Metal layer: Aluminum was used with a thickness of 40 µm.

4) Internal resin layer: Unstretchable polypropylene (CPP) was used with a thickness of 80 µm.

A pouch film having a thickness of 153 µm was prepared including 1) to 4) and the adhesive layer.

### Embodiment 2

A pouch film was prepared under the same conditions as in the embodiment 1 except the coating layer of which the main agent contains 90 parts by weight of urethane resin and 20 parts by weight of silica powder (with a diameter of 5 to 15 µm), relative to 100 parts by weight of melamine resin (with a viscosity of 140 cPs at 25°C and a specific gravity of 1.00).

### Embodiment 3

A pouch film was prepared under the same conditions as in the embodiment 1 except the coating layer of which the main agent contains 10 parts by weight of carnauba wax (with a diameter of 10 to 15 µm).

### Embodiment 4

A pouch film was prepared under the same conditions as in the embodiment 1 except the coating layer of which the main agent contains 10 parts by weight of polyester polyol, and the polyester polyol having a hydroxyl value (OH value) of 60 mgKOH/g, and a weight-average molecular weight of 2500 g/mol, and a viscosity of 3000 cP at 25 °C.

### Embodiment 5 (hereinafter referred to as comparative examples)

A pouch film was prepared under the same conditions as in the embodiment 1 except the coating layer of which the main agent contains 60 parts by weight of urethane resin, relative to 100 parts by weight of melamine resin (with a viscosity of 160 cPs at 25°C and a specific gravity of 1.50).

### Embodiment 6

A pouch film was prepared under the same conditions as in the embodiment 1 except the coating layer of which the main agent contains 110 parts by weight of urethane resin, relative to 100 parts by weight of melamine resin (with a viscosity of 160 cPs at 25°C and a specific gravity of 1.50).

### Embodiment 7

A pouch film was prepared under the same conditions as in the embodiment 1 except the coating layer of which the main agent contains 10 parts by weight of silica powder (with a diameter of 30 to 45 µm).

### Embodiment 8

A pouch film was prepared under the same conditions as in the embodiment 1 except the coating layer of which the main agent contains 40 parts by weight of silica powder (with a diameter of 30 to 45 µm).

### Embodiment 9

A pouch film was prepared under the same conditions as in the embodiment 1 except the coating layer of which the main agent contains 1 part by weight of carnauba wax (with a diameter 25 to 40 µm).

### Embodiment 10

A pouch film was prepared under the same conditions as in the embodiment 1 except the coating layer of which the main agent contains 20 parts by weight of carnauba wax (with a diameter 25 to 40 µm).

### Embodiment 11

A pouch film was prepared under the same conditions as in the embodiment 1 except the coating layer of which the main agent contains 1 part by weight of polyester polyol, and the polyester polyol having a hydroxyl value (OH value) of 70 mgKOH/g and a weight-average molecular weight of 3200 g/mol.

### Embodiment 12

A pouch film was prepared under the same conditions as in the embodiment 1 except the coating layer of which the main agent contains 15 parts by weight of polyester polyol, and the polyester polyol having a hydroxyl value (OH value) of 65 mgKOH/g, and a weight-average molecular weight of 1700 g/mol.

### Embodiment 13

A pouch film was prepared under the same conditions as in the embodiment 1 except the coating layer prepared from a composition in which the main agent, the curing agent, and the solvent were mixed in a weight ratio of 13 : 1 : 2.

### Embodiment 14

A pouch film was prepared under the same conditions as in the embodiment 1 except the coating layer prepared from a composition in which the main agent, the curing agent, and the solvent were mixed in a weight ratio of 17 : 1 : 2.

### Comparative example 1

A pouch film was prepared under the same conditions as in the embodiment 1 except that there was no coating layer.

### 2. Methods and results of evaluating physical properties

Regarding the pouch films prepared in the embodiments 1 to 14 and the comparative example 1, the physical properties were measured and tabulated in the following Tables 1 to 3.

The tensile strength in each of the MD and the TD were measured under the conditions of 23°C and a humidity of 50%.

The elongation in each of the MD and the TD were measured under the conditions of 23°C and a humidity of 50%.

**[Table 1]**

| Test items | | Measures | Comparative example 1 | Embodiment 1 | Embodiment 2 | Embodiment 3 | Embodiment 4 |
|---|---|---|---|---|---|---|---|
| Tensile strength | MD | Kg/15mm | 17.1 | 17 | 18.0 | 16.7 | 16.5 |
| | TD | | 17.2 | 17.1 | 16.8 | 17.7 | 17.3 |
| Elongation | MD | % | 102.6 | 100.4 | 100 | 105.1 | 102.3 |
| | TD | | 102.4 | 111.2 | 109.5 | 114.5 | 119.2 |
| Moldability | | mm | 6 | 7 | 7 | 7 | 7 |

**[Table 2]**

| Test items | | Measures | Embodiment 5 | Embodiment 6 | Embodiment 7 | Embodiment 8 | Embodiment 9 |
|---|---|---|---|---|---|---|---|
| Tensile strength | MD | Kg/15mm | 15.8 | 16.0 | 16.7 | 16.5 | 18.1 |
| | TD | | 16.5 | 16.8 | 17.7 | 16.3 | 17.0 |
| Elongation | MD | % | 99.2 | 100.2 | 106.1 | 100.3 | 107.1 |
| | TD | | 104.2 | 101.5 | 119.5 | 104.2 | 119.5 |
| Moldability | | mm | 6 | 7 | 7 | 6 | 7 |

**[Table 3]**

| Test items | | Measures | Embodiment 10 | Embodiment 11 | Embodiment 12 | Embodiment 13 | Embodiment 14 |
|---|---|---|---|---|---|---|---|
| Tensile strength | MD | Kg/15mm | 15.9 | 16.5 | 17.1 | 16.5 | 17.7 |
| | TD | | 16.1 | 16.1 | 17.7 | 17.3 | 17.3 |
| Elongation | MD | % | 105.0 | 109.7 | 104.8 | 103.3 | 99.1 |
| | TD | | 109.2 | 109.5 | 109.5 | 108.2 | 102.5 |
| Moldability | | mm | 6 | 6 | 7 | 6 | 6 |

FIG. 2 shows electrolyte resistance test results of a cell pouch for a secondary battery according to the embodiment 1 of the disclosure. The electrolyte resistance test was performed by the method described herein.

From the results shown in FIG. 2, it will be understood that the cell pouch according to the embodiment 1 is considerably excellent in the electrolyte resistance. On the other hand, the comparative example 1 showed the surface conditions as if the PET layer was stained with foreign substances even after only 5 seconds had elapsed.

The test results of the embodiments 2 to 4 showed the physical properties similar to those of the embodiment 1.

On the other hand, the test results of the embodiments 5 to 14 showed the surface conditions as if the surface was stained with foreign substances like that of the comparative example 1.

FIG. 3 shows solvent resistance test results of the cell pouch for the secondary battery according to the embodiment 1 of the disclosure. The solvent resistance test was performed by the method described herein.

From the results shown in FIG. 3, it will be understood that the cell pouch according to the embodiment 1 is considerably excellent in the solvent resistance. On the other hand, the comparative example 1 showed weak solvent resistance to each solvent.

The test results of the embodiments 2 to 4 showed the physical properties similar to those of the embodiment 1.

On the other hand, the test results of the embodiments 5 to 14 showed the weak solvent resistance to the solvents like that of the comparative example 1.

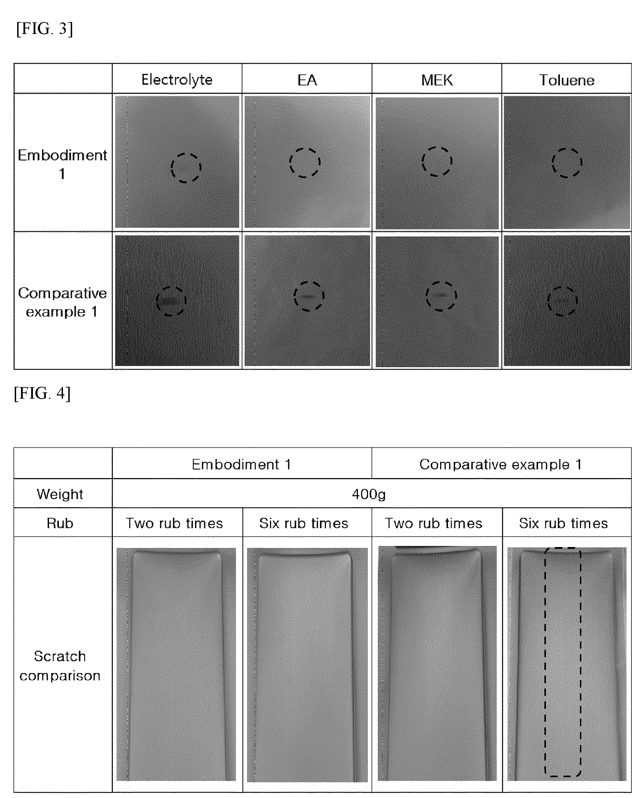

FIG. 4 shows scratch resistance test results of the cell pouch for the secondary battery according to the embodiment 1 of the disclosure. The scratch resistance test was performed by the method described herein.

From the results shown in FIG. 4, it will be understood that the cell pouch according to the embodiment 1 has the scratch resistance with no white lines for both cases of two reciprocation times and six reciprocation times. On the other hand, the comparative example 1 showed a white line (inside the red dotted line) for the case of six reciprocation times.

The test results of the embodiments 2 to 4 showed the physical properties similar to those of the embodiment 1.

On the other hand, the test results of the embodiments 5 to 14 showed the white lines like that of the comparative example 1.

Although a few embodiments of the disclosure have been described above with reference to the accompanying drawings, the disclosure is not limited to the embodiments and drawings disclosed herein, and it is obvious that various changes can be made by those skilled in the art without departing from the scope of the disclosure. In addition, even though operational effects of configurations were not explicitly described while describing the embodiments of the disclosure, it is obvious that the effects expectable from the configurations should be recognized.

### [Reference Numerals]

10: coating layer
20: external resin layer
30: metal layer
40: internal resin layer

## Claims

1. A cell pouch comprising:
a coating layer that contains melamine resin;
an external resin layer provided on one side of the coating layer;
a metal layer provided on one side of the external resin layer; and
an internal resin layer provided on one side of the metal layer.

2. The cell pouch of claim 1, wherein
the coating layer comprises a main agent and a curing agent, and
the main agent contains 70 to 100 parts by weight of urethane resin, 15 to 30 parts by weight of silica powder, 2 to 15 parts by weight of wax, and 2 to 10 parts by weight of polyester polyol, relative to 100 parts by weight of the melamine resin.

3. The cell pouch of claim 2, wherein the coating layer comprises the main agent and the curing agent in a weight ratio of 14 to 16 : 1.

4. The cell pouch of claim 1, wherein the melamine resin has a viscosity of 90 to 150 cPs at 25°C.

5. The cell pouch of claim 2, wherein the silica powder has a diameter of 1 to 20 µm.

6. The cell pouch of claim 2, wherein the wax has a diameter of 1 to 20 µm.

7. The cell pouch of claim 1, having a tensile strength of 10 to 30kg/15mm in each of a machine direction (MD) and a transverse direction (TD) under conditions of 23°C and a humidity of 50%.

8. The cell pouch of claim 1, having an elongation of 80 to 100% in each of a machine direction (MD) and a transverse direction (TD) under conditions of 23°C and a humidity of 50%.

9. The cell pouch of claim 1, wherein, when observed with naked eyes after forming the cell pouch by using a mold, of which a molding groove has a depth of 4 to 7.5 mm and lowering a hydraulic cylinder into the molding groove, a depth before the surface of the cell pouch has a crack is 7.0 to 7.5mm (where, the crack means a crack of which a length is longer than or equal to 0.1 mm).

10. The cell pouch of claim 1, wherein, when observed with naked eyes after dropping one drop of an electrolyte (ethylene carbonate (EC): diethyl carbonate (DEC): ethylmethyl carbonate (EMC) = 1: 1:1, LiPF₆ 1M) on the surface of the coating layer of the cell pouch, which has a width of 100 mm and a length of 100 mm, using a pipette and after 60 seconds wiping off the dropped electrolyte, the surface of the coating layer is maintained the same as before dropping the electrolyte with the pipette.

11. The cell pouch of claim 1, wherein, after the surface of the coating layer of the cell pouch, which has a width of 100 mm and a length of 100 mm, is rubbed with a cotton swab soaked in any one solvent of the electrolyte (ethylene carbonate (EC): diethyl carbonate (DEC): ethylmethyl carbonate (EMC) = 1: 1:1, LiPF₆ 1M), ethyl alcohol, methylethylketone, and toluene, by 1 cm to each of the left and right from a touching point, the number of rub times of when the surface of the coating layer is peeled off is more than or equal to 30.

12. The cell pouch of claim 1, wherein there are no scratches even when a steel brush is put on the surface of the cell pouch, which has a width of 80 mm and a length of 150 mm, pressed with a weight of 400g, and reciprocated 2 or 6 times to make scratches and a degree of scratches is then measured using KP-M4250 equipment (where, the scratch means a scratch on the surface of the cell pouch by 0.1 µm or more in a depth direction and/or length direction).
